# EUROPÄISCHE PATENTSCHRIFT

(11) **EP 1 284 065 B1**
(45) Veröffentlichungstag und Bekanntmachung des Hinweises auf die Patenterteilung: **09.06.2010**
(21) Anmeldenummer: 01931396.4
(22) Anmeldetag: 30.03.2001
(51) Int. Cl.: H04L 12/28, B60R 16/02

(54) **VERFAHREN ZUM HINZUFÜGEN EINES GERÄTS IN EINEM FAHRZEUGKOMMUNIKATIONSNETZ**
METHOD FOR INTEGRATING A DEVICE INTO A VEHICLE COMMUNICATIONS NETWORK
PROCEDE POUR INTEGRER UN APPAREIL DANS UN RESEAU DE COMMUNICATION AUTOMOBILE

(30) Priorität: 16.05.2000 DE 10023703
(43) Veröffentlichungstag der Anmeldung: 19.02.2003
(73) Patentinhaber: ROBERT BOSCH GMBH, 70442 Stuttgart (DE)
(72) Erfinder: VOLLMER, Vasco, 31188 Holle (DE); HOFMANN, Matthias, 01705 Freital (DE)
(86) Internationale Anmeldenummer: PCT/DE2001/001267
(87) Internationale Veröffentlichungsnummer: WO 2001/089151

(56) Entgegenhaltungen:
- EP-A- 0 929 170
- EP-A- 0 986 216

## Beschreibung

### Stand der Technik

Die Erfindung geht aus von einem Verfahren zum Hinzufügen eines Geräts in einem Fahrzeugkommunikationsnetz nach der Gattung des unabhängigen Patentanspruchs.

Es ist bereits bekannt, in Kraftfahrzeugen vermehrt Fahrzeugkommunikationsnetze einzusetzen, um Multimediakomponenten miteinander zu vernetzen. Solch ein Fahrzeugkommunikationsnetz ist beispielsweise der MOST-Bus, über den mittels optischer Verkabelung Daten zwischen den Multimediakomponenten ausgetauscht werden. Solche Multimediakomponenten sind beispielsweise ein Rundfunkempfänger, ein CD-Spieler und ein Navigationsgerät. Ein Busmanager führt die Verwattungsaufgaben des Fahrzeugkommunikationsnetzes durch, wozu beispielsweise das Erkennen von neuen Geräten gehört. Die Geräte des Fahrzeugkommunikationsnetzes werden an verschiedenen Orten im Fahrzeug platziert.

Aus der EP-A-0929170 ist ein Verfahren bekannt, bei dem in einem Kommunikationsnetz neue Geräte hinzugefügt werden können. Ein neues Gerät wird dort vom Busmanager erkannt und es wird eine hinzugefügte Funktionalität unterstützt oder es wird eine Standardfunktionalität eingerichtet. Andere Geräte werden vom Vorliegen einer hinzugefügten Funktionalität unterrichtet.

Das erfindungsgemäße Verfahren zum Hinzufügen eines Geräts in einem Fahrzeugkommunikationsnetz mit den Merkmalen des unabhängigen Patentanspruchs hat demgegenüber den Vorteil, dass ein hinzuzufügendes Gerät erkannt wird, dass ermittelt wird, ob ein spezieller Treiber für das neue Gerät vorliegt und dass, wenn dies nicht der Fall ist, ein solcher Treiber angefordert wird. Vorteilhafterweise wird das erkannte Gerät in die Datenbank des Fahrzeugkommunikationsnetzes eingetragen, und den anderen Geräten des Fahrzeugkommunikationsnetzes wird mitgeteilt, dass das neue Gerät dem Fahrzeugkommunikationsnetz hinzugefügt wurde. Damit wird vorteilhafterweise eine systematische Behandlung eines neu hinzugekommenen Geräts erreicht. Automatisch wird dadurch auch den anderen Geräten mitgeteilt, dass dieses Gerät gegebenenfalls auch zur Steuerung mit seinen Funktionen zur Verfügung steht.

Durch die in den abhängigen Ansprüchen aufgeführten Maßnahmen und Weiterbildungen sind vorteilhafte Verbesserungen des im unabhängigen Patentanspruch angegebenen Verfahrens zum Hinzufügen eines Geräts in einem Fahrzeugkommunikationsnetz möglich.

Besonders vorteilhaft ist, dass sich das neue Gerät beim Busmanager anmeldet und somit von dem Busmanager als neues Gerät erkannt wird. Damit wird vorteilhafterweise die Phase der Identifizierung des neuen Geräts eingeleitet, so dass dann der Anschluß des neuen Geräts an das Fahrzeugkommunikationsnetz alle anderen angeschlossenen Geräten bekannt gemacht wird und die Funktionen des neuen Geräts den anderen Geräten verfügbar gemacht werden.

Weiterhin ist es von Vorteil, dass das neue Gerät eine Initialisierungsphase des Fahrzeugkommunikationsnetzes auslöst, so dass dann alle Geräte vom Busmanager, die nun an das Fahrzeugkommunikationsnetz angeschlossen sind, erkannt werden.

Darüber hinaus ist es von Vorteil, wenn der spezielle Treiber mit dem neu hinzukommenden Gerät mitgeliefert wird, d.h., dass der Treiber auf dem neu hinzukommenden Gerät abgespeichert ist und über das Kommunikationsnetz geladen werden kann. Damit ist die Beschaffung des speziellen Treibers für das neu hinzukommende Gerät erheblich vereinfacht.

Desweiteren ist es von Vorteil, dass der spezielle Treiber von dem Benutzer des Fahrzeugkommunikationsnetzes angefordert wird. Vorteilhafterweise wird dem Benutzer mittels Mitteln zur optischen und akustischen Darstellung mitgeteilt, welcher spezielle Treiber und wie er zu laden ist. Mittels eines Speichers, vorzugsweise einer CD-ROM, die der Benutzer dann in einen Speicher des Fahrzeugkommunikationsnetzes einlegt, wird dieser spezielle Treiber für das neu hinzugekommene Gerät geladen.

Weiterhin ist es von Vorteil, dass der spezielle Treiber für das neu hinzugekommene Gerät über ein Telekommunikationsnetz, beispielsweise dem Internet, direkt von der Internetseite des Treiberherstellers geladen wird. Damit wird vorteilhafterweise eine vom Benutzer abgeschirmte Weise der Beschaffung des speziellen Treibers realisiert. Das ist eine einfache und bequeme Methode.

Weiterhin ist es von Vorteil, dass die Einträge auch für solche Geräte, die bereits wieder vom Fahrzeugkommunikationsnetz entfernt wurden, bis zu dem Zeitpunkt in der Datenbank vorgehalten werden, bis die Datenbank erschöpft ist. Dann werden die Einträge zuerst gelöscht, die für solche Geräte eingetragen wurden, die für eine längste Zeit nicht am Fahrzeugkommunikationsnetz angeschlossen waren. Durch Markieren der Einträge kann es jedoch vorteilhafterweise möglich sein, dass bestimmte Einträge vor einer Löschung gesperrt werden, um diese Einträge weiterhin zur Verfügung bereitzuhalten.

Weiterhin ist es von Vorteil, dass ein Standardtreiber für das neu hinzugekommene Gerät verwendet wird, falls kein spezieller Treiber sofort verfügbar ist. Mit solchen Standardtreibern wird vorteilhafterweise eine Grundfunktion eines neu hinzugekommenen Gerätes realisiert, wodurch eine Verwendung des neuen Geräts möglich wird. Spezielle, für dieses Gerät charakteristische Funktionen sind mit einem Standardtreiber dann allerdings nicht möglich.

Darüber hinaus ist es von Vorteil, dass als Fahrzeugkommunikationsnetz ein Bussystem nach IEEE 1394 verwendet wird. Dies ist ein serieller Bus, bei dem Endgeräte entweder über ein 4 bis 6-adriges Kupferkabel oder einen Lichtwellenleiter angeschlossen werden. Mittels dieses Bussystems können verschiedene Kommunikationsnetztopologien realisiert werden.

Weiterhin ist es von Vorteil, dass das hinzugekommene Gerät Mittel aufweist, um die Verfahrensschritte des erfindungsgemäßen Verfahrens durchzuführen. Weiterhin ist es auch von Vorteil, dass ein Gerät einen Busmanager aufweist, der die erfindungsgemäßen Verfahrensschritte durchführt.

### Zeichnung

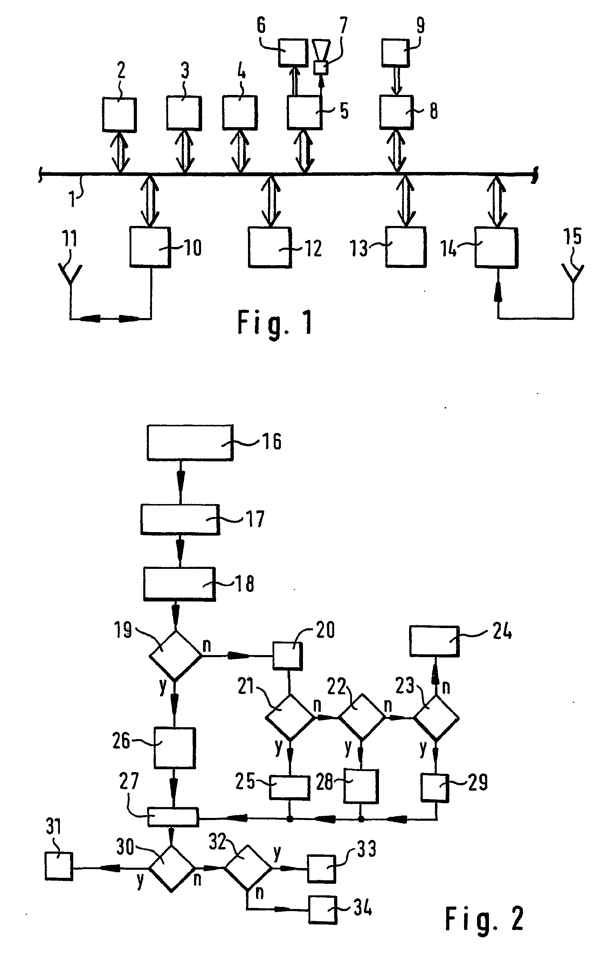

Ausführungsbeispiele der Erfindung sind in der Zeichnung dargestellt und werden in der nachfolgenden Beschreibung näher erläutert. Es zeigen Figur 1 eine Konfiguration eines Fahrzeugkommunikationsnetzes und Figur 2 das erfindungsgemäße Verfahren als Flußdiagramm.

### Beschreibung

In Fahrzeugen werden zunehmend Fahrzeugkommunikationsnetze eingesetzt. Die Geräte, die an das Fahrzeugkommunikationsnetz angeschlossen werden, sind nicht immer alle sofort mit der Erstausrüstung vorhanden, insbesondere solche Geräte, die erst nach der Erstausrüstung des Fahrzeugs auf den Markt kommen. Später werden von Benutzern nach Wunsch und Bedarf neue Geräte zu dem Fahrzeugkommunikationsnetz hinzugefügt.

Daher wird erfindungsgemäß ein Verfahren zum Hinzufügen eines Gerätes in einem Fahrzeugkommunikationsnetz eingesetzt. Dabei ermittelt ein Busmanager anhand einer Datenbank des Fahrzeugkommunikationsnetzes, ob für ein als neu erkanntes Gerät ein spezieller Treiber, der alle Funktionen des neuen Geräts verwendbar macht, oder ein Standardtreiber zur Verfügung steht. Steht nur der Standardtreiber zur Verfügung, wird der spezielle Treiber für das neu erkannte Gerät angefordert und ein Eintrag für das erkannte Gerät in die Datenbank eingetragen. Den anderen Geräten des Fahrzeugkommunikationsnetzes wird das Vorhandensein des neu hinzugekommenen Gerätes mitgeteilt. Der spezielle Treiber wird entweder von dem neu hinzugekommenen Gerät selbst geladen, oder es wird ein Benutzer aufgefordert, mittels eines auswechselbaren Speichermediums den speziellen Treiber zu laden, oder es wird über eine Schnittstelle über ein externes Telekommunikationsnetz der spezielle Treiber von einer externen Datenbank geladen.

Die Einträge für die Geräte in der Datenbank des Fahrzeugkommunikationsnetzes sind mit den verfügbaren Treibern gekoppelt. Diese Kopplung ist entweder das direkte Abspeichern der Treiber oder der Verweis auf den Treiber, d.h. wo der Treiber abgespeichert und damit ladbar ist.

In Figur 1 ist die Konfiguration eines Fahrzeugkommunikationsnetzes dargestellt. An einen Bus 1 sind über Datenein-/-ausgänge ein Busmanager 2, eine Datenbank 3, ein Speicher 4, eine Signalverarbeitung 5, eine Signalverarbeitung 8, eine Sende-/Empfangsstation 10, ein CD-Spieler 12, ein Navigationsgerät 13 und ein Rundfunkempfänger 14 angeschlossen. Alle an den Bus 1 angeschlossenen Geräte weisen Buscontroller auf, die die Kommunikation über den Bus 1 ermöglichen. An einen ersten Datenausgang der Signalverarbeitung 5 ist eine Anzeige 6 angeschlossen. An einen zweiten Datenausgang der Signalverarbeitung 5 ist ein Lautsprecher 7 mit Audioverstärker angeschlossen. An einen Dateneingang der Signalverarbeitung 8 ist eine Eingabevorrichtung 9 angeschlossen. An einen zweiten Datenein-/-ausgang der Sende-/Empfangsstation 10 ist eine Antenne 11 angeschlossen. An einen Eingang der Empfangsstation 14 ist eine Antenne 15 angeschlossen.

Der Bus 1 ist hier ein Bussystem nach IEEE 1394, dem sogenannten Firewall. Aber auch andere Bussysteme sind hier einsetzbar. Der Busmanager 2 läuft hier auf einem eigenen Gerät mit einem Prozessor, wobei auf diesem Gerät auch andere Anwendungen abgespeichert und abrufbar sein können.

Der Speicher 4 ist ein Gerät zur Aufnahme von auswechselbaren Speichermedien, also z.B. ein CD-ROM-Laufwerk oder ein DVD-Laufwerk oder ein herkömmliches Diskettenlaufwerk. Alternativ ist auch ein Speicher möglich, der ein fest installiertes Speichermedium aufweist oder Kombinationen eines fest installierten Speichers mit einem Laufwerk für auswechselbare Speichermedien hat.

Die Anzeige 6 ist hier ein Plasmabildschirm und die Eingabevorrichtung 9 weist manuelle Bedienelemente auf, wobei Menüs, die auf der Anzeige 6 dargestellt werden können, ausgewählt werden. Auch eine Sprachsteuerung ist hier alternativ möglich. Auch die Anzeige 6 kann, wenn sie mit einer berührungssensitiven Schicht ausgestattet ist, als Eingabevorrichtung 9 dienen.

Die Sende-/Empfangsstation 10 und die Antenne 11 bilden ein Mobiltelefon, das durch Einwahl die Verbindung zu einem öffentlichen Telekommunikationsnetz herstellen kann. Dabei ist insbesondere die Verbindung zum Internet möglich, womit dann Treiber von Internetseiten heruntergeladen werden können. Das Navigationsgerät 13 weist eine Ortungsvorrichtung auf, um den Standort des Busses 1 festzustellen. Der Rundfunkempfänger 14 weist ein Hochfrequenzempfangsteil auf, das die mittels der Antenne 15 empfangenen Rundfunksignale filtert, verstärkt und in eine Zwischenfrequenz umsetzt. Darüber hinaus weist der Rundfunkempfänger 14 einen Analog-/Digital-Wandler auf, um die empfangenen Rundfunksignale in digitale Signale umzuwandeln. Eine Demodulation und Decodierung wird auch im Rundfunkempfänger 14 durchgeführt. Die so empfangenen Daten werden über den Bus 1 zur Signalverarbeitung 5 übertragen, um dann mittels des Lautsprechers 7 oder um, wenn es sich um Multimediadaten handelt, auch mittels der Anzeige 6 dargestellt zu werden.

In Figur 2 ist das erfindungsgemäße Verfahren als Flußdiagramm dargestellt. In Verfahrensschritt 16 wird das neu hinzukommende Gerät, hier ist es der CD-Spieler 12, mechanisch an das Fahrzeugkommunikationsnetz 1 angeschlossen. Dabei weist das Fahrzeugkommunikationsnetz 1 als Bus 1 Schnittstellen auf, an die neue Geräte anschließbar sind. Das Fahrzeugkommunikationsnetz ist auch durch Erweiterungen fortsetzbar. Auch die neuen Geräte müssen dafür die entsprechenden Buscontroller aufweisen.

In Verfahrensschritt 17 wird dann der CD-Spieler 12 von dem Busmanager 2 als ein neues Gerät erkannt. Hier wird das neue Gerät dadurch erkannt, dass der CD-Spieler 12 dem Busmanager 2 über den Bus 1 eine Meldung sendet, dass er sich als neues Gerät anmeldet. Alternativ ist es hier möglich, dass sich das neue Gerät, der CD-Spieler 12, dadurch anmeldet, dass es eine Initialisierungsphase für des Fahrzeugkommunikationsnetz 1 auslöst. Diese Initialisierungsphase beinhaltet, dass alle an das Fahrzeugkommunikationsnetz 1 angeschlossenen Geräte von dem Busmanager 2 erkannt werden, um dann in die Datenbank 3 eingetragen zu werden.

In Verfahrensschritt 18 sucht dann der Busmanager 2 anhand der Einträge in der Datenbank 3, ob für den CD-Spieler 12 als neu hinzukommendes Gerät ein spezieller Treiber bereits vorliegt. Dies wird dann in Verfahrensschritt 19 überprüft. Der spezielle Treiber macht es möglich, dass alle Funktionalitäten des CD-Spielers 12 ausführbar sind. Beispielsweise lädt dann die Signalverarbeitung 8 den speziellen Treiber für den CD-Spieler 12, um dann anhand der Eingaben des Benutzers mittels der Eingabevorrichtung 9 die entsprechenden Aktionen am CD-Spieler 12 auszulösen.

Wird in Verfahrensschritt 19 festgestellt, dass der spezielle Treiber für den CD-Spieler 12 nicht vorliegt, dann wird in Verfahrensschritt 20 von dem Busmanager 2 eine Anforderung für den speziellen Treiber ausgelöst. Dafür wird in Verfahrensschritt 21 überprüft, ob der CD-Spieler 12 selber in seinem Speicher den speziellen Treiber aufweist. Ist das der Fall, dann wird in Verfahrensschritt 25 der spezielle Treiber von dem CD-Spieler 12 geladen und in die Datenbank 3 eingetragen. Dann ist der spezielle Treiber für Geräte, die den CD-Spieler 12 steuern wollen, verfügbar. Dieser Eintrag wird in Verfahrensschritt 27 vorgenommen.

Wurde in Verfahrensschritt 21 festgestellt, dass der spezielle Treiber auf dem CD-Spieler 12 nicht zur Verfügung steht, dann wird in Verfahrensschritt 22 überprüft, ob der spezielle Treiber über das öffentliche Telekommunikationsnetz abrufbar ist. Dazu wird mittels des Mobiltelefons bestehend aus der Sende-/Empfangsstation 10 und der Antenne 11 auf einen Server eingewählt, um eine Verbindung zum Internet zu erlangen. Dann wird nach einer Internetseite gesucht, die möglicherweise den speziellen Treiber aufweist. Diese Angabe ist entweder von dem CD-Spieler 12 dem Busmanager 2 mitgeteilt worden, welche Internetseite zu wählen ist, oder es wird eine Suchmaschine verwendet, um die entsprechenden Seiten mit den Treibern zu finden. Ist das der Fall, dann wird in Verfahrensschritt 28 der spezielle Treiber von der Internetseite geladen. Danach folgt wiederum in Verfahrensschritt 27 der Eintrag mit dem speziellen Treiber in die Datenbank 3.

Wurde in Verfahrensschritt 22 jedoch festgestellt, dass über das Internet der spezielle Treiber nicht abrufbar ist, was z.B. auch der Fall sein kann, wenn nicht bekannt ist, wie der spezielle Treiber von dem Internet geladen werden kann, dann wird in Verfahrensschritt 23 der Benutzer aufgefordert, den Treiber mittels des Speichers 4 zu laden. Ist das dem Benutzer möglich, dann wird in Verfahrensschritt 29 auf Anweisung mittels der Anzeige 6 und/oder des Lautsprechers 7 von dem Benutzer ein Speichermedium in den Speicher 4 eingelegt, um dann den speziellen Treiber zu laden. Auf Verfahrensschritt 29 folgt dann wieder Verfahrensschritt 27, um den Eintrag mit dem speziellen Treiber in der Datenbank 3 vorzunehmen.

Ist es jedoch auch dem Benutzer in Verfahrensschritt 23 unmöglich, den speziellen Treiber selbst zu laden, dann wird in Verfahrensschritt 24 ein Standardtreiber aus der Datenbank verwendet, um den CD-Spieler 12 zu steuern. Dies teilt der Benutzer mit, indem er entsprechende Eingaben mittels der Eingabevorrichtung 9 macht. Später wird dann erneut versucht, einen speziellen Treiber zu laden. Dies wird hier so durchgeführt, dass nach bestimmten Zeitabständen eine Anforderung an den Benutzer ergeht, den speziellen Treiber zu laden. Dies kann beispielsweise auch dann geschehen, wenn der Benutzer das Fahrzeugkommunikationsnetz 1 verwendet, d.h. nach dem Starten des Kraftfahrzeugs.

Wurde in Verfahrensschritt 19 festgestellt, dass in der Datenbank 3 bereits der spezielle Treiber für den CD-Spieler 12 enthalten ist, dann wird in Verfahrensschritt 26 der Treiber von der Datenbank geladen, um ihn dann in Verfahrensschritt 27 mit dem neuen Eintrag für den CD-Spieler 12 zu koppeln.

In Verfahrensschritt 30 wird überprüft, ob die Datenbank 3 nun ihre Speicherkapazität erreicht hat. Ist das der Fall, dann wird in Verfahrensschritt 31 der letzte Eintrag gelöscht, der dadurch charakterisiert ist, dass dieser Eintrag für ein Gerät vorgenommen wurde, das für die längste Zeit nicht am Fahrzeugkommunikationsnetz angeschlossen war. Weiterhin wird gegebenenfalls der Eintrag für das neu hinzugekommene Gerät markiert, so dass dieser Eintrag vor einer Löschung bewahrt wird. Danach folgt der Normalbetrieb des Fahrzeugkommunikationsnetzes.

Wurde in Verfahrensschritt 30 festgestellt, dass die Kapazität der Datenbank nicht erschöpft ist, dann wird in Verfahrensschritt 32 überprüft, ob der Eintrag für den CD-Spieler 12 mit dem speziellen Treiber als geschützt markiert werden soll. Damit wird der Eintrag für den CD-Spieler 12 bei einer Erschöpfung der Speicherkapazität der Datenbank 3 nicht gelöscht. Ist das also der Fall, dann wird in Verfahrensschritt 33 der Eintrag als geschützt markiert, ist das nicht der Fall, dann wird in Verfahrensschritt 34 der Eintrag nicht markiert und der Normalbetrieb des Fahrzeugkommunikationsnetzes geht weiter.

Alternativ ist es möglich, dass das erfindungsgemäße Verfahren nicht alle oben dargestellten Methoden verwendet, um den speziellen Treiber zu laden. Wenn beispielsweise ein Fahrzeug keine Sende-/-Empfangsstation aufweist, kann es nicht über das Internet den speziellen Treiber laden, dann ist es auf den Benutzer beziehungsweise das neu hinzukommende Gerät angewiesen, um den speziellen Treiber zu laden.

Ein Gerät des Fahrzeugkommunikationsnetzes 1 ist derart ausgebildet, dass es den Busmanager aufweist, also einen notwendigen Prozessor und einen Speicher, um die Software des Busmanagers aufzunehmen. Die neu hinzukommenden Geräte sind so ausgebildet, dass sie, wenn sie an das Fahrzeugkommunikationsnetz 1 angeschlossen werden, automatisch eine Meldung an den Busmanager 2 abgeben, um sich zu identifizieren. Alternativ können neu hinzukommende Geräte so ausgebildet sein, dass sie, wenn sie an das Fahrzeugkommunikationsnetz 1 angeschlossen werden, automatisch eine Initialisierungphase auslösen, die zur Erkennung des neuen Geräts führt.

## Patentansprüche

1. Verfahren zum Hinzufügen eines neuen Geräts in einem Fahrzeugkommunikationsnetz, wobei Geräte an verschiedenen Orten in einem Fahrzeug an das Fahrzeugkommunikationsnetz (1) angeschlossen werden, wobei das neue Gerät (12) zu dem Fahrzeugkommunikationsnetz (1) hinzugefügt wird, wobei das hinzugefügte Gerät (12) durch einen Busmanager (2) über eine Meldung oder eine Initialisierungsphase erkannt wird, wobei durch den Busmanager(2) anhand einer Datenbank (3) ermittelt wird, ob ein spezieller Treiber oder ein Standardtreiber für das erkannte Gerät (12) vorliegt, wobei, wenn nur ein Standardtreiber für das erkannte Gerät (12) vorliegt, ein spezieller Treiber für das erkannte Gerät (12) angefordert wird, wobei das erkannte Gerät (12) in die Datenbank (3) eingetragen wird und den anderen Geräten des Fahrzeugkommunikationsnetzes (1) mitgeteilt wird, dass ein neues Gerät (12) dem Fahrzeugkommunikationsnetz (1) hinzugefügt wurde und wobei der spezielle Treiber vom Busmanager (2) über ein mit dem Fahrzeugkommunikationsnetz (1) verbindbares Telekommunikationsnetz abgerufen wird.

2. Verfahren nach einem der vorhergehenden Ansprüche, **dadurch gekennzeichnet, dass** Einträge für vom Fahrzeugkommunikationsnetz (1) entfernte Geräte mit den jeweiligen speziellen Treibern in der Datenbank (3) vorgehalten werden, bis die Kapazität der Datenbank erschöpft ist und dass dann die Einträge der Geräte gelöscht werden, die die längste Zeit mit dem Fahrzeugkommunikationsnetz (1) verbunden waren.

3. Verfahren nach Anspruch 2, **dadurch gekennzeichnet, dass** vorgegebene Einträge von Geräten vor einer Löschung aus der Datenbank markiert werden.

4. Verfahren nach einem der vorhergehenden Ansprüche, **dadurch gekennzeichnet, dass** der Standardtreiber für das hinzugefügte Gerät (12) verwendet wird, bis ein spezieller Treiber geladen wird.

5. Verfahren nach einem der vorhergehenden Ansprüche, **dadurch gekennzeichnet, dass** als Fahrzeugkommunikationsnetz (1) ein Bus nach IEEE 1394 verwendet wird.

## Claims

1. Method for adding a new appliance in a vehicle communication network, wherein appliances are connected to the vehicle communication network (1) at various locations in a vehicle, wherein the new appliance (12) is added to the vehicle communication network (1), wherein the added appliance (12) is recognized by a bus manager (12) by means of a message or an initialization phase, wherein the bus manager (2) uses a database (3) to ascertain whether there is a specific driver or standard driver available for the recognized appliance (12), wherein, if only a standard driver is available for the recognized appliance (12), a specific driver is requested for the recognized appliance (12), wherein the recognized appliance (12) is entered into the database (3) and the other appliances in the vehicle communication network (1) are notified that a new appliance (12) has been added to the vehicle communication network (1), and wherein the specific driver is retrieved by the bus manager (2) via a telecommunication network which can be connected to the vehicle communication network (1).

2. Method according to one of the preceding claims, **characterized in that** entries for appliances removed from the vehicle communication network (1) are kept with the respective specific drivers in the database (3) until the capacity of the database is exhausted, and **in that** then the entries for the appliances which were connected to the vehicle communication network (1) for the longest time are erased.

3. Method according to Claim 2, **characterized in that** prescribed entries for appliances are marked prior to erasure from the database.

4. Method according to one of the preceding claims, **characterized in that** the standard driver is used for the added appliance (12) until a specific driver is loaded.

5. Method according to one of the preceding claims, **characterized in that** the vehicle communication network (1) used is a bus based on IEEE 1394.

## Revendications

1. Procédé d'adjonction d'un nouvel appareil dans un réseau de communication de véhicule, dans lequel des appareils sont raccordés en différents emplacements d'un véhicule au réseau (1) de communication du véhicule,
le nouvel appareil (12) étant ajouté au réseau (1) de communication du véhicule,
l'appareil (12) ajouté étant reconnu par un gestionnaire de bus (2) par un message ou une phase d'initialisation,
le gestionnaire de bus (2) déterminant à l'aide d'une base de données (3) s'il existe un pilote spécial ou un pilote standard pour l'appareil (12) détecté et demandant un pilote spécial pour l'appareil détecté (12) lorsqu'il n'existe qu'un pilote standard pour l'appareil (12) détecté,
l'appareil (12) détecté étant introduit dans la base de données (3) et les autres appareils du réseau (1) de communication du véhicule étant informés qu'un nouvel appareil (12) a été ajouté au réseau (1) de communication du véhicule,
le pilote spécial étant demandé par le gestionnaire de bus (2) par un réseau de télécommunication qui peut être relié au réseau (1) de communication du véhicule.

2. Procédé selon l'une des revendications précédentes, **caractérisé en ce que** des entrées pour des appareils distants du réseau (1) de communication du véhicule sont réservées avec les pilotes spéciaux correspondants dans la base de données (3) jusqu'à ce que la capacité de la base de données soit épuisée et **en ce que** les entrées des appareils qui ont été reliés pendant la plus longue durée au réseau (1) de communication du véhicule sont effacées.

3. Procédé selon la revendication 2, **caractérisé en ce que** des entrées prédéterminées d'appareils sont marquées avant leur effacement de la base de données.

4. Procédé selon l'une des revendications précédentes, **caractérisé en ce que** jusqu'à ce qu'un pilote spécial soit chargé, c'est le pilote standard qui est utilisé pour l'appareil (12) ajouté.

5. Procédé selon l'une des revendications précédentes, **caractérisé en ce qu'**il utilise comme réseau (1) de communication de véhicule un bus selon IEEE 1394.
